# EUROPÄISCHE PATENTANMELDUNG

(11) **EP 1 657 133 A2**
(43) Veröffentlichungstag der Anmeldung: **17.05.2006**
(21) Anmeldenummer: 05110739.9
(22) Anmeldetag: 15.11.2005
(51) Int. Cl.: B60T 17/06, B60T 8/42, F15B 1/04

(54) **Membranspeicher**

(30) Priorität: 15.11.2004 DE 102004055094; 19.01.2005 DE 102005002433
(71) Anmelder: Continental Teves AG & Co. oHG, 60488 Frankfurt am Main (DE)
(72) Erfinder: Lenz, Rene, 60599 Frankfurt/M (DE)

(57) **Zusammenfassung**

Die Erfindung betrifft einen Membranspeicher für eine schlupfgeregelte Fahrzeugbremsanlage, welcher in einer hydraulischen Verbindung zwischen einer Radbremse und einer hydraulischen Pumpe angeordnet ist, mit einem, in einer Gehäusebohrung eingespannt angeordneten Medientrennelement umfassend eine Membran aus elastischem Werkstoff, die in Bezug auf einen Druckmitteleinlass und/oder Druckmittelauslass zwecks Druckmittelaufnahme konkav ausgebildet ist.

Der Kern der Erfindung liegt darin begründet, dass die Membran mittelbar unter Zwischenlage eines Membrantellers von einer Speicherfeder beaufschlagt ist, und dass der Membranteller in Bezug auf den Druckmitteleinlass und/oder Druckmittelauslass konkav ausgebildet ist.

## Beschreibung

Die Erfindung betrifft einen Membranspeicher nach dem Oberbegriff des Patentanspruchs 1.

In großserientechnisch durchgesetzten Bremsanlagen werden Niederdruckspeicher vom Kolbentyp verwendet, die die gestellten Anforderungen ganz grundsätzlich erfüllen. Ein Speichersystem vorgenannter Bauart geht hierzu beispielhaft aus der DE 41 41 929 A1 hervor.

Aus der EP 0 482 916 A1 geht ein Membranspeicher hervor, der aus einem einteiligen, dünnwandigen und plastisch verformten Gehäuse besteht, dessen zwischen der Membran und dem Gehäuse befindliche Kammer einen separat eingesetzten Druckmittelanschluß aufweist. Auf der entgegengesetzten Seite der Membran befindet sich ein Füllanschluß im Gehäuse, um eine weitere, zwischen der Membran und dem Gehäuse befindliche Kammer mit einem konstanten Speicherdruck zu versehen, der die Druck- und Volumencharakteristik des Membranspeichers festlegt. Der vorgeschlagene Membranspeicher ist ausschließlich auf die Verwendung als Hochdruckspeicher ausgelegt.

Aus der DE 197 53 308 A1 ist ein Niederdruckmembranspeicher zur Verwendung in einer Fahrzeugbremsanlage bekannt geworden. Die Membran ist derart konkav ausgebildet, dass diese nach Auslenkung selbsttätig eine Rückstellbewegung in eine Ruheposition ausführt.

Es ist die Aufgabe der Erfindung, einen einfachen, kostengünstigen und dennoch funktionssicheren Membranspeicher bereitzustellen, der für den Niederdruckbereich in einem Fahrzeugbremssystem verwendet werden kann. Es soll insbesondere ermöglicht werden, dass selbst bei sehr niedrigen Blockierdrücken eine Volumenaufnahme in dem Niederdruckspeicher erfolgt, um insbesondere den Gegebenheiten bei Niedrigreibwertbedingungen oder Zweiradbremsanlagen Rechnung zu tragen.

Die Aufgabe wird erfindungsgemäß für einen Membranspeicher der angegebenen Art mit der Merkmalskombination des Patentanspruchs 1 gelöst, indem die Membran mittelbar unter Zwischenlage eines Membrantellers von einer Speicherfeder beaufschlagt ist, und dass der Membranteller in Bezug auf den Druckmitteleinlass und/oder Druckmittelauslass konkav ausgebildet ist.

Erfindungsgemäß wird eine Aufgabentrennung vorgenommen, indem die Membran von Rückstellfunktionen befreit ist, und weitgehend vollständig für die Medientrennfunktion optimiert werden kann. Die Rückstellfunktion wird von einer Speicherfeder erfüllt, und die Membranstabilität wird von einem Membranteller unterstützt.

Weitere Merkmale, Vorteile und Anwendungsmöglichkeiten der Erfindung gehen im nachfolgenden aus der Beschreibung eines Ausführungsbeispieles hervor.

Es zeigen:
- Fig. 1: ein schematischer hydraulischer Schaltplan zur Verdeutlichung der prinzipiellen Zusammenhänge bei einer schlupfgeregelten Fahrzeugbremsanlage, und
- Fig. 2 + 3: vergrößerte Schnittdarstellung eines Ausführungsbeispiels eines Membranspeichers jeweils in ungefülltem und gefülltem Zustand.

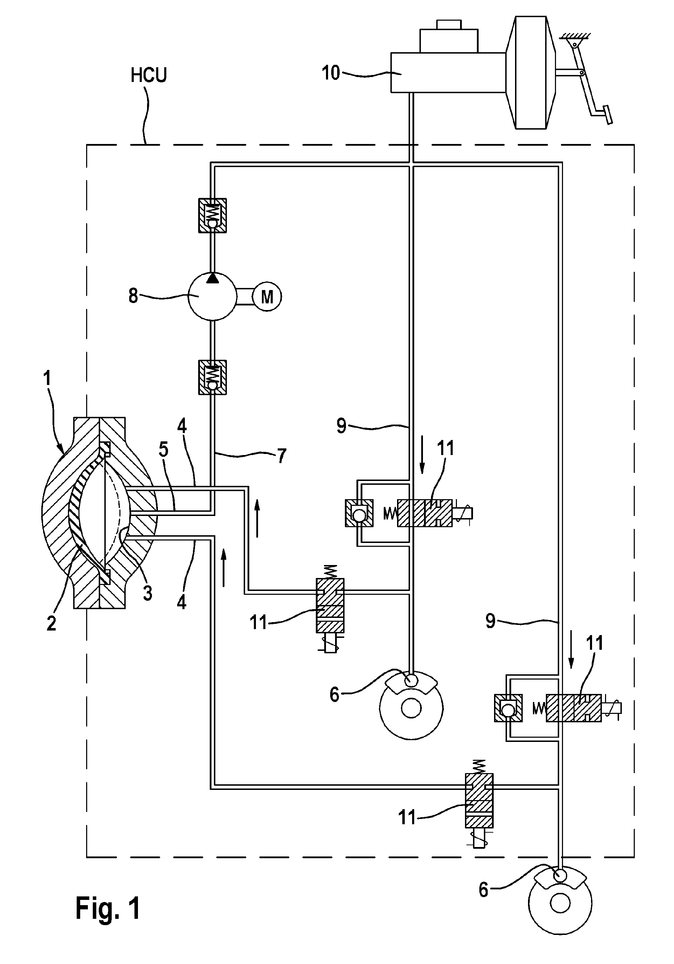

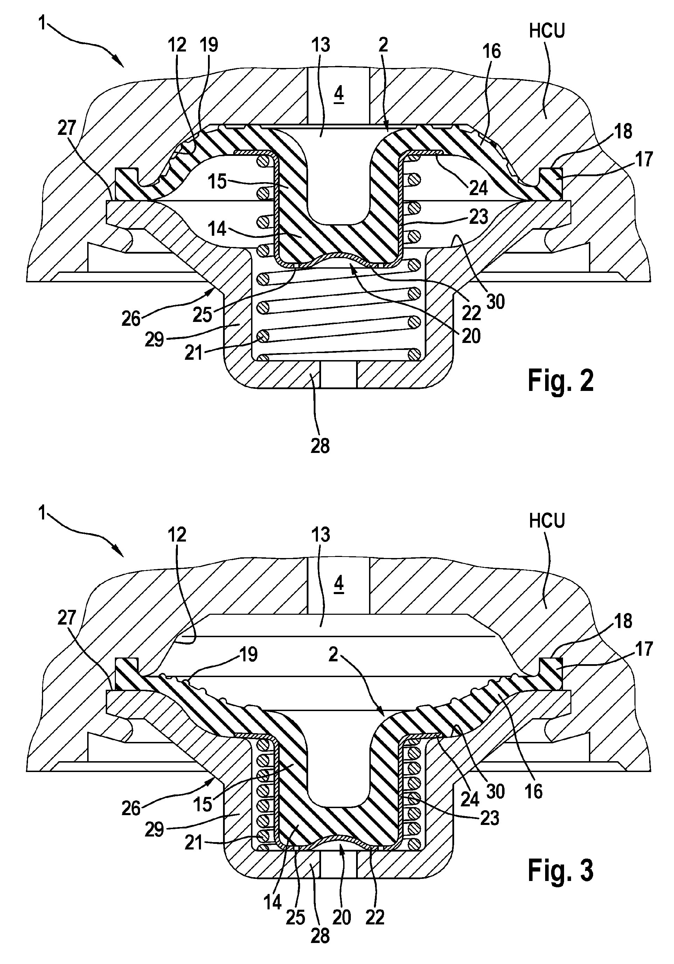

Die Fig. 1 veranschaulicht die Zusammenhänge einer hydraulischen Verschaltung und Funktion einer schlupfgeregelten Kraftfahrzeugbremsanlage am Beispiel eines einzigen Bremskreises umfassend zwei Radbremsen 6, mit einer blockförmigen Hydraulikeinheit (HCU) umfassend elektrohydraulische Bauteile wie Ventile, Kanäle und einen Membranspeicher 1, der in der Hydraulikeinheit integriert vorgesehen ist, und eine Membran 2 als Medientrennelement aufweist, wobei die Membran 2 in einer Gehäusebohrung 3 der Hydraulikeinheit HCU vorgesehen ist, und mit in Richtung auf die Membran 2 in der Hydraulikeinheit vorgesehenem Druckmitteleinlass 4 und Druckmittelauslass 5. Der Druckmitteleinlass 4 ist an Radbremsen 6 angeschlossen, und andererseits mit einem Druckmittelkanal 7, an einen Saugpfad einer motorgetriebenen Pumpe 8 angeschlossen. Die Pumpe 8 mündet mit einer Pumpendruckseite in eine Bremsleitung 9 ein, welche die Radbremsen 6 mit einem Bremsdruckgeber 10 verbindet. Sowohl in der Bremsleitung 9 als auch jeweils in dem Druckmittelkanal 7 sind paarweise Druckregelventile 11 (je 1 Einlassventil und je 1 Auslassventil), welche Druckaufbau-,Druckhalte- als auch Druckabbauphase in jeder Radbremse 6 regeln. Bei der abgebildeten Ausführungsform ist der Membranspeicher 1 mit Druckmittel gefüllt, welches von der Pumpe 9 über ein Rückschlagventil (Saugventil) ansaugbar ist. Die Rückstellkraft einer Speicherfeder in Verbindung mit der Abnahme des Druckmittelvolumens im Membranspeicher 1 im Pumpenbetrieb bewirkt eine Rückstellbewegung in eine unausgelenkte Ruhestellung, wie aus Fig. 2 ersichtlich.

Nachstehend wir im Einzelnen auf Fig. 2 eingegangen. Die blockförmige Hydraulikeinheit (HCU) bildet ein wesentliches Gehäuseteil zur Aufnahme des Membranspeichers 1 und verfügt über eine Stufenbohrung 12 zur Bildung eines druckmittelbefüllbaren Raumes 13, welcher zusammen mit der Membran 2 aus elastischem Werkstoff den drückmittelbefüllbaren Raum 13 begrenzt. Die Membran 2 ist in Bezug auf einen kombinierten Druckmittelein- und Druckmittelauslass 4 konkav mit einem Boden 14, einer Wandung 15 und mit einem Rand 16 ausgebildet, wobei der Rand 16 umfangsseitig einen Wulst 17 aufweist, welcher in eine Nut 18 der Stufenbohrung 12 eingespannt ist.

Die Membran 2 ist naturgemäß stark beansprucht. Ein Membranriss würde eine Undichtigkeit der Bremsanlage verursachen, und eine Verseuchung mit Wasser oder Luft ermöglichen. Vor diesem Hintergrund ist große Sorgfalt auf spannungsgerechte und dauerfeste Membrankonturen und Membranquerschnitte verwendet, wie in Figur 2 gut erkennbar ist. In der Zeichnung ist ferner deutlich erkennbar ist, werden membranseitig schroffe Übergänge oder Kanten jeglicher Art konsequent vermieden, um Membranbeschädigungen zu vermeiden.

Auf der benetzten Seite ist die Membran 2 ersichtlich mit Unebenheiten wie Rippen 19, Noppen oder ähnlicher Oberflächenstrukturierung versehen, um ein ansaugen oder ankleben an einer Gehäusewandung zu vermeiden. Weiterhin ist die Membrankontur zweckmäßigerweise an die Kontur der Stufenbohrung 12 angepasst, um einen möglichst gleichmäßigen Spannungsverlauf durch ein möglichst gleichförmiges Anliegen der Membran 2 an der Stufenbohrung 12 sicherzustellen. Grundsätzlich gleiches gilt für die membrantellerseitige Gestaltung der Membran 2.

Auf der, dem druckmittelbefüllbaren Raum 13 abgewandten Seite wird die Membran 2 mittelbar über einen Membranteller 20 von einer federnd vorgespannten Speicherfeder 21 beaufschlagt, welche die erforderlichen Membranrückstellkräfte erzeugt. Die Speicherfeder 21 kann im Vergleich mit Hochdruckspeichern schwach, das heißt mit einer weichen Federkonstanten ausgestattet sein, wodurch eine Druckmittelaufnahme bei niedrigen Blockierdrücken ermöglicht wird.

Der Membranteller 20 ist in Übereinstimmung mit der Membran 2 topfförmig mit einem Boden 22, mit einer Wandung 23 und mit einem Rand 24 ausgebildet. Die Speicherfeder 21 umgreift die Wandung 23 auf einer Außenseite und liegt auf dem Rand 24 auf. Wie zu ersehen ist, hat der membranseitig anliegende Rand 24 einen Kreisringquerschnitt mit einer radialen Erstreckung, welche wesentlich größer als der Drahtquerschnitt der Speicherfeder 21 ausgebildet ist, um eine gleichmäßige Krafteinleitung bei niedriger Flächenpressung zu ermöglichen. Der Boden 22 des Membrantellers 20 ist in Bezug auf den kombinierten Druckmitteleinlass und Druckmittelauslass 4 konvex ausgebildet, was eine gewisse Zentrierwirkung erzeugt. Im übrigen ist der Membranteller 20 vorzugsweise aus Blechwerkstoff mit Umformverfahren hergestellt, wobei Kanten sorgfältig verrundet ausgebildet sind. Wie weiterhin zu ersehen ist, weist zumindest der Boden 22 des Membrantellers 20 Durchgangsbohrungen 25 auf, damit bei einer zweiteilig montierbaren Bauweise von Membranteller 20 und Membran 2 ein montagebedingt eingekammertes Luftvolumen aus dem Topfbodenbereich einfach entweichen kann. Es versteht sich, dass die Durchgangsbohrungen 25 gratfrei ausgeführt sind, und dass deren Durchmesser so gering ausgebildet ist, dass die herrschenden Druckdifferenzen keinen schädigenden Einzug der elastischen Membran in die Durchgangsbohrungen 25 hervorruft. Bei einer einteilig-vulkanisierten Zusammenfassung von Membran und Membranteller 2, 20 zu einer Baueinheit können die Durchgangsbohrungen 25 prinzipiell entfallen. Die Durchgangsbohrungen 25 können jedoch auch - soweit deren Querschnitt etwas vergrößert ausgebildet ist - ganz bewusst von einvulkanisiertem Gummiwerkstoff durchgriffen werden - um eine ergänzende, formschlüssige Sicherung vorzusehen.

Der Raum 13, welcher der Membran 2 zugänglich ist, wird durch die Stufenbohrung 12 und ein Verschlußelement - laut Ausführungsbeispiel ein Deckel 26 - begrenzt, welcher unter abdichtender Auflage auf dem Wulst 17 auf einer Bohrungsstufe 27 aufsitzt, und in dieser Position befestigt ist. Vorzugsweise ist der Deckel 26 wie in der Fig. 2 und 3 gezeigt mit dem Werkstoff der Hydraulikeinheit hochdruckdicht verstemmt oder aber verclincht. Wie aus den Zeichnungen deutlich hervorgeht, ist der Deckel 26 topfförmig mit einem Boden 28, mit einer Wandung 29 und mit einem Rand 30 ausgebildet, der Deckel 26 ragt etwas aus der Hydraulikeinheit heraus, und wobei die Speicherfeder 21 zumindest teilweise innerhalb der Wandung 29 angeordnet ist.

Wie schließlich die Fig. 3 zeigt, ist zunächst der Rand 24 des Membrantellers 20 an den Rand 30 des Deckels 26 anlegbar, um das Speicheraufnahmevolumen zu begrenzen. Auf diese Art und Weise wird ein einfacher und praxisgerechter Anschlag gebildet, der eine Membranbeschädigung infolge Überbelastung vermeidet. Die Abstimmung aller Maße und Toleranzen zwischen Deckel 26 und Membranteller 20 wird vorzugsweise so gewählt, dass zunächst der Rand 24 des Membrantellers 20 am Deckel anschlägt, bevor der Boden 22 von dem Membranteller 20 zum Anschlag an dem Boden 28 von dem Deckel 26 gelangt. Auf diese Art und Weise wird eine statisch und dynamisch bestimmte Anschlagsystematik erreicht, und unzulässig hohe Extrusionen der elastischen Membran 2 werden zuverlässig vermieden. Die elastische Deformation des Randes 24 infolge dieser Anschlagsystematik wird bei einem Vergleich zwischen Fig. 2 und Fig. 3 besonders deutlich. Nach dem Ausführungsbeispiel sind die Maße und Toleranzen so ausgebildet, dass bei Erstanschlag des Randes 24 am Rand 30 noch etwa 1/10 mm Distanz verbleibt, bevor auch der Boden 22 am Deckel 26 anschlägt.

Obwohl die Erfindung primär für die Speicherung von Druckmittel konstruiert und vorgesehen ist, kann prinzipiell eine Umwidmung zur Verwendung als Pulsationsdämpfer erfolgen. Zu diesem Zweck ist eine geänderte Abstimmung, unter Anpassung konstruktiver Größen, wie insbesondere der Federkonstanten der Speicherfeder 21 und/oder eine Anpassung des Aufnahmevolumens in dem Raum 13 angezeigt. Die Speicherfeder 21 dient bei Verwendung als Druckmittelspeicher im wesentlichen nur dem Ausschub des akkumulierten Druckmittels, so dass prinzipiell eine relativ schwache Feder ausreicht. Bei Verwendung als Dämpfer ist für die Speicherfeder 21 jedoch eine Federkonstante erforderlich, deren Größe an das abzudämpfende Druckstoßniveau angepasst ist. Eine sehr nachgiebige, weiche, Federkonstante ist nicht zur Abdämpfung von Hochdruckpulsationen geeignet.

### Bezugszeichenliste

- 1: Membranspeicher
- 2: Membran
- 3: Gehäusebohrung
- 4: Druckmitteleinlass
- 5: Druckmittelauslass
- 6: Radbremse(n)
- 7: Druckmittelkanal
- 8: Pumpe
- 9: Bremsleitung
- 10: Bremsdruckgeber
- 11: Druckregelventil(e)
- 12: Stufenbohrung
- 13: Raum
- 14: Boden
- 15: Wandung
- 16: Rand
- 17: Wulst
- 18: Nut
- 19: Rippe
- 20: Membranteller
- 21: Speicherfeder
- 22: Boden
- 23: Wandung
- 24: Rand
- 25: Durchgangsbohrung
- 26: Deckel
- 27: Bohrungsstufe
- 28: Boden
- 29: Wandung
- 30: Rand

## Patentansprüche

1. Membranspeicher für eine schlupfgeregelte Fahrzeugbremsanlage, welcher in einer hydraulischen Verbindung zwischen einer Radbremse (6) und einer hydraulischen Pumpe (8) angeordnet ist, mit einem, in einer Gehäusebohrung (3) eingespannt angeordneten Medientrennelement umfassend eine Membran (2) aus elastischem Werkstoff, die in Bezug auf einen Druckmitteleinlass (4) und/oder Druckmittelauslass (5) zwecks Druckmittelaufnahme konkav ausgebildet ist, **dadurch gekennzeichnet**, das die Membran (2) mittelbar unter Zwischenlage eines Membrantellers (20) von einer Speicherfeder (21) beaufschlagt ist, und dass der Membranteller (20) in Bezug auf den Druckmitteleinlass (4) und/oder Druckmittelauslass (5) konkav ausgebildet ist.

2. Membranspeicher nach Anspruch 1, **dadurch gekennzeichnet, daß** der Membranteller (20) topfförmig mit einem Boden (22), mit einer Wandung (23) und mit einem Rand (24) ausgebildet ist, und dass die Speicherfeder (21) die Wandung (23) umgreift, und auf dem Rand (24) aufliegt.

3. Membranspeicher nach Anspruch 2, **dadurch gekennzeichnet, daß** der Boden (22) in Bezug auf den Druckmitteleinlass (4) und/oder Druckmittelauslass (5) konvex ausgebildet ist.

4. Membranspeicher nach Anspruch 2, **dadurch gekennzeichnet, daß** der Boden (22) und/oder die Wandung (23) Durchgangsöffnungen (25) aufweist.

5. Membranspeicher nach Anspruch 2, **dadurch gekennzeichnet, daß** der Membranteller (20) aus Blech mittels spanloser Umformverfahren hergestellt ist.

6. Membranspeicher nach Anspruch 1, **dadurch gekennzeichnet, daß** der Membran (2) ein Raum (13) zugänglich ist, welcher von einer Stufenbohrung (12) und von einem Deckel (26) begrenzt wird, und dass der Deckel (26) unter Auflage auf einem Wulst (17) an einer Bohrungsstufe (27) abgestützt und befestigt ist.

7. Membranspeicher nach Anspruch 6, **dadurch gekennzeichnet, daß** der Deckel (26) topfförmig mit einem Boden (28), mit einer Wandung (29) und mit einem Rand (30) ausgebildet ist, und dass die Speicherfeder (21) zumindest teilweise innerhalb der Wandung (29) angeordnet ist.

8. Membranspeicher nach Anspruch 2 und 7, **dadurch gekennzeichnet, daß** der Rand (24) des Membrantellers (20) an den Rand (30) des Deckels (26) anlegbar ist.

9. Membranspeicher nach Anspruch 2, **dadurch gekennzeichnet, daß** der Membranteller (20) an die Membran (2) angelegt oder einstückig mit der Membran (2) vulkanisiert ist.
